# EUROPÄISCHE PATENTANMELDUNG

(11) **EP 3 901 720 A1**
(43) Veröffentlichungstag der Anmeldung: **27.10.2021**
(21) Anmeldenummer: 20170955.7
(22) Anmeldetag: 22.04.2020
(51) Int. Cl.: G05B 19/418

(54) **INTEGRITÄTSPRÜFUNG BEI LEITSYSTEMEN TECHNISCHER ANLAGEN**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)

(57) **Zusammenfassung**

Vorgeschlagen wird ein Operator Station Server (2, 3) eines Leitsystems (1) für eine technische Anlage, insbesondere eine Fertigungs- oder Prozessanlage, der dazu ausgebildet und vorgesehen ist, eine Anfrage für eine Bedienhandlung von einem Operator der technischen Anlage entgegenzunehmen und die Ausführung der Bedienhandlung zu bewirken. Der Operator Station Server (2, 3) ist dadurch gekennzeichnet, dass er dazu ausgebildet und vorgesehen ist, vor der Ausführung der Bedienhandlung eine Integritätsprüfung bei von der Bedienhandlung betroffenen Komponenten (20, 21, 22, 23, 24, 12) des Leitsystems (1) vorzunehmen.

## Beschreibung

Die Erfindung betrifft einen Operator Station Server eines Leitsystems für eine technischen Anlage, insbesondere eine Fertigungs- oder Prozessanlage, der dazu ausgebildet und vorgesehen ist, eine Anfrage für eine Bedienhandlung von einem Operator der technischen Anlage entgegenzunehmen und die Ausführung der Bedienhandlung zu bewirken, mit den Merkmalen des Anspruchs 1. Außerdem betrifft die Erfindung ein Leitsystem für eine technische Anlage gemäß Anspruch 10 und ein Verfahren gemäß Anspruch 11.

Im Kontext von Industrial Security in verfahrenstechnischen Anlagen wird unter dem Begriff "Integrität" der Schutz gegen unbemerkte Manipulation von Softwarediensten und -komponenten verstanden. Unter anderem um die grundlegenden Anforderungen des führenden Industrial Security-Standards IEC 62443 zu erfüllen, finden Mechanismen zum Integritätsschutz immer häufiger Anwendung in der speziell für verfahrenstechnische Anlage entwickelten Software. Dennoch kommt es häufig vor, dass erst durch eine aufwändige Fehleranalyse im Anschluss an eine fehlgeschlagene Ausführung einer bestimmten Bedienhandlung (z.B. Ändern eines Stellwertes) festgestellt wird, dass die Ursache dafür ein fehlerhafte bzw. korrupter Softwaredienst war.

Neben dem durch die Fehleranalyse verursachten Zeitaufwand werden dadurch die Zuverlässigkeit, Verfügbarkeit und die Integrität der Anlage stark beeinträchtigt. Es ist bekannt, die Integritätsprüfung über die gesamte Software eines Leitsystems (die ggf. modular aufgebaut wird und aus mehreren Diensten/Komponenten bestehen kann) und zyklisch, d.h. in bestimmten Zeitabständen, durchzuführen.

Durch eine über die gesamte Software durchgeführte Integritätsprüfung wird die Performanz der Software in der Regel stark beeinträchtigt. Eine Integritätsprüfung beinhaltet in der Regel die Berechnung eines oder mehrerer Werte unter Verwendung kryptographischer Algorithmen. Derartige Algorithmen werden zwar - beispielsweise durch deren Implementierung in der Hardware und stetigen Weiterentwicklung von Prozessoren - immer effizienter gemacht. Trotzdem bleiben sie - insbesondere bei Anwendung auf größere Software-Komponenten - immer noch sehr rechenintensiv. Deswegen werden die Zeitabstände für die zyklische Prüfung möglichst groß gewählt. Dies hat wiederum zur Folge, dass die Bedienhandlungen, die den Aufruf von Diensten erfordern und deren Integrität zum Zeitpunkt des Anstoßens bereits verletzt wurde, trotz der manipulierten Dienste angestoßen werden und somit die Zuverlässigkeit, Verfügbarkeit und Integrität der (verfahrenstechnischen) Anlage beeinträchtigen.

Der Erfindung liegt die Aufgabe zugrunde, ein Leitsystem und einen dazugehörigen Operator Station Server einer technischen Anlage anzugeben, dessen Integrität effizienter und ressourcenschonender überprüft werden kann.

Diese Aufgabe wird gelöst durch einen Operator Station Server eines Leitsystems für eine technische Anlage mit den Merkmalen des Anspruchs 1. Außerdem wird die Aufgabe gelöst durch ein Leitsystem einer technischen Anlage gemäß Anspruch 10. Zudem wird die Aufgabe gelöst durch ein Verfahren gemäß Anspruch 11. Vorteilhafte Weiterbildungen ergeben sich aus den abhängigen Ansprüchen.

Bei einem Operator Station Server der eingangs beschriebenen Art wird die Aufgabe erfindungsgemäß dadurch gelöst, dass der Operator Station Server dazu ausgebildet und vorgesehen ist, vor der Ausführung der Bedienhandlung eine Integritätsprüfung bei von der Bedienhandlung betroffenen Komponenten des Leitsystems vorzunehmen.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Bei einer Komponente kann es sich um einzelne Sensoren oder Aktoren der technischen Anlage handeln. Eine Komponente kann aber auch ein Zusammenschluss mehrerer Sensoren und/oder Aktoren sein, beispielsweise ein Motor, ein Reaktor, eine Pumpe oder ein Ventilsystem. Zudem sind unter den Begriff "Komponente" computerimplementierte Dienste und Services des Leitsystems zu fassen. Beispiele hierfür sind der Beschreibung des Ausführungsbeispiels zu entnehmen.

Unter einem "Operator Station Server" wird vorliegend ein Server verstanden, der zentral Daten eines Bedien- und Beobachtungssystems sowie in der Regel Alarm- und Messwertarchive eines (Prozess-)Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener der technischen Anlage bzw. des Leitsystems verstanden. Der Operator interagiert mittels spezieller Benutzerschnittstellen mit der technischen Anlage bzw. dem Leitsystem und steuert spezielle technische Funktionen der Anlage. Hierzu kann der Operator ein Bedien- und Beobachtungssystem des Leitsystems nutzen.

Unter einer Bedienhandlung wird der technische Eingriff in eine technische Funktionalität der technischen Anlage verstanden. Beispielsweise kann hierunter das Verändern eines Stellwerts, die Quittierung einer Alarmmeldung oder das Ändern eines Parameters verstanden werden. Die Bedienhandlung wird durch eine (Bedien-)Anfrage eines Operators/Bedieners der technischen Anlage an das Leitsystem der technischen Anlage ausgelöst. Die (Bedien-)Anfrage kann mittels eines Operator Station Clients an den Operator Station Server gerichtet werden, welcher die Ausübung der Bedienhandlung (mittelbar oder unmittelbar) bewirken kann.

Mittels der Integritätsprüfung kann der Operator Station Server ermitteln, ob eine Komponente, die von der anzustoßenden Bedienhandlung betroffen ist, integer ist, d.h. derart ausgebildet ist, wie der Operator Station Server dies erwartet. Beispielsweise kann der Operator Station Server im Rahmen der Integritätsprüfung überprüfen, ob eine für die Komponente charakteristische Kennzahl mit der erwarteten (Soll-)Kennzahl übereinstimmt. Der Operator Station Server kann hierzu beispielsweise Hashwerte und/oder Zertifikate der betreffenden Komponenten abfragen und mit ihm bekannten (Soll-)Werten vergleichen, um eine Integrität der Komponenten zu prüfen.

Die Integritätsprüfung ist auf die Komponenten beschränkt, die von der Bedienhandlung betroffen sind. Durch diese Beschränkung ist der Ressourcenaufwand im Vergleich zu bislang bekannten Methoden deutlich verringert. Es werden gezielt nur diejenigen Komponenten untersucht, die bei der Durchführung einer Bedienhandlung auch beteiligt sind und nicht etwa das gesamte Leitsystem. Mit "betroffen" sind dabei die Komponenten bezeichnet, die an der Ausführung der durch den Operator angefragten Bedienhandlung beteiligt sind. Die betroffenen Komponenten müssen dabei nicht zwangsläufig nur dem (einen) Operator Station Server zugeordnet sein. Vielmehr können die Komponenten in der technischen Anlage bzw. dem Leitsystem verteilt sein und damit beispielsweise auf mehreren Operator Station Servern oder anderen Servern implementiert sein.

Die Integrationsprüfung findet darüber hinaus vor der Durchführung der eigentlichen Bedienhandlung statt, so dass gegebenenfalls eine manipulierte Bedienhandlung gar nicht ausgeführt wird. Um das Ergebnis der Integritätsprüfung verfügbar zu gestalten, kann es in einem Datenspeicher hinterlegt sein. Dieser Datenspeicher kann sich innerhalb der technischen Anlage befinden. Es ist genauso möglich, dass der Datenspeicher cloudbasiert ist und sich gegebenenfalls außerhalb der technischen Anlage befindet. Unter einer Cloud wird dabei ein Rechnernetzwerk mit onlinebasierten Speicher- und Serverdiensten verstanden. Die in der Cloud gespeicherten Daten sind online zugänglich, sodass die technische Anlage über das Internet Zugriff auf ein zentrales Datenarchiv in der Cloud hat.

Im Fall einer negativen Integritätsprüfung kann eine zustandlose Alarmmeldung erzeugt und in dem Datenspeicher hinterlegt werden. Die zustandlose Alarmmeldung kann dabei Informationen darüber umfassen, welcher Art die angefragte Bedienhandlung ist, welche Komponenten von der Bedienhandlung betroffen sind und wie das Ergebnis der Integrationsprüfung lautet.

Die Integritätsprüfung kann bei einer Variante der Erfindung automatisch im Hintergrund ablaufen, ohne dass der Operator dies explizit mitbekommt oder beeinflussen kann. Hierbei liegt der wesentliche Nutzen der Erfindung darin, dass für ein späteres Audit mögliche Fehler bestimmten Bedienhandlungen eindeutig zugeordnet werden können, um im Nachhinein eine Fehlerauswertung effizient vornehmen zu können.

Bei einer weiteren Variante der Erfindung kann dem Operator vor dem Stellen der Anfrage eine Auswahloption darüber visuell dargeboten werden, ob die Integrationsprüfung für die Bedienhandlung durchgeführt werden soll (oder nicht). Der Operator kann damit gezielt entscheiden, ob eine Bedienhandlung beispielsweise derart bedeutend ist, dass eine Integritätsprüfung sinnvoll ist.

Vorteilhafterweise kann der Operator Station Server dazu ausgebildet und vorgesehen sein, dem Operator das Ergebnis der Integritätsprüfung explizit visuell darzubieten. Dabei kann der Operator Station Server besonders vorteilhaft dazu ausgebildet und vorgesehen sein, dem Operator für den Fall einer negativen Integritätsprüfung vor dem Bewirken der Bedienhandlung eine Auswahloption darüber visuell darzubieten, ob die Bedienhandlung tatsächlich bewirkt werden soll. Da eine Verfügbarkeit in verfahrenstechnischen Anlagen eine hohe Priorität hat, wird die Bedienhandlung, deren betroffene Komponenten die Integritätsprüfung nicht bestanden haben, nicht gleich abgebrochen, sondern nur für eine Zeit verzögert, um dem Operator die Möglichkeit zu geben, zu entscheiden, ob er die Bedienhandlung trotz der negativen Integritätsprüfung bewirkt haben will.

Ein erfindungsgemäßes Verfahren weist die folgenden Schritte auf:
a) Stellen einer Anfrage für eine Bedienhandlung an einen Operator Station Server eines Leitsystems einer technischen Anlage durch einen Operator der technischen Anlage;
b) Automatisiertes Ermitteln der von der angefragten Bedienhandlung betroffenen Komponenten des Leitsystems durch den Operator Station Server;
c) Vornehmen einer Integritätsprüfung der zuvor ermittelten Komponenten durch den Operator Station Server.

Bezüglich der Erläuterungen zu dem Verfahrensanspruch und die damit verbundenen Vorteile sei auf die obenstehenden Ausführungen zu dem Operator Station Server verwiesen.

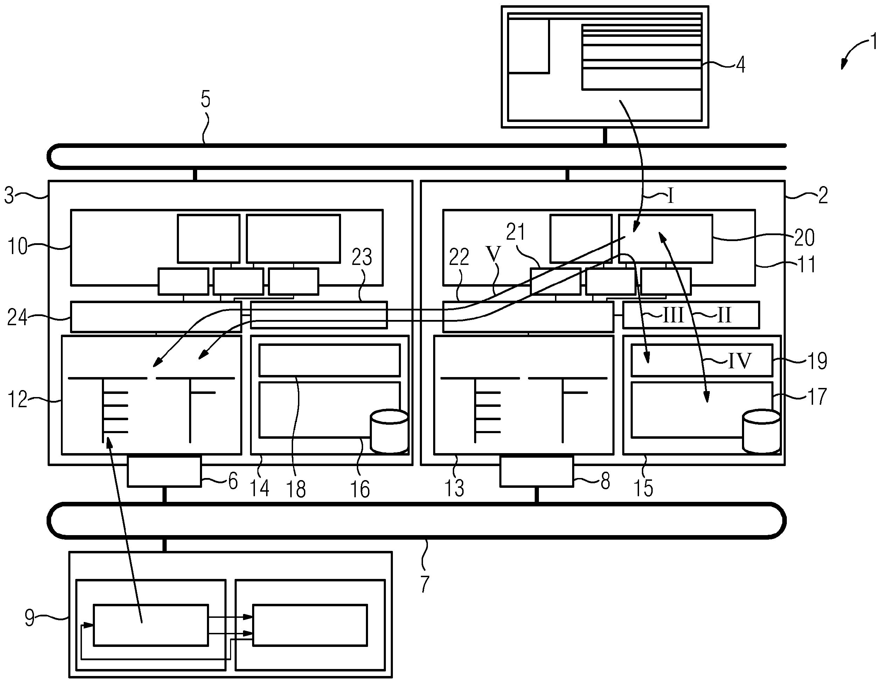

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein Teil eines erfindungsgemäßen Leitsystems 1 einer als verfahrenstechnischen Anlage ausgebildeten technischen Anlage dargestellt. Das Leitsystem 1 umfasst einen ersten Server eines Bediensystems bzw. einen ersten Operator Station Server 2, einen zweiten Operator Station Server 3 und einen Operator Station Client 4. Die beiden Operator Station Server 2, 3 und der Operator Station Client 4 sind über einen Terminalbus 5 miteinander und mit nicht dargestellten weiteren Komponenten des Leitsystems 1 wie einem Engineering System Server oder einem Prozessdatenarchiv verbunden.

Ein Benutzer bzw. Operator hat mittels des Operator Station Clients 4 mittels des Terminalbus 5 im Kontext eines Bedienens und Beobachtens Zugriff auf den Operator Station Server 2, 3. Der Terminalbus 5 kann, ohne sich darauf zu beschränken, beispielsweise als Industrial Ethernet ausgebildet sein.

Der erste Operator Station Server 2 weist eine erste Geräteschnittstelle 6 auf, die mit einem Anlagenbus 7 verbunden ist. Analog dazu weist der zweite Operation Station Server 3 eine zweite Geräteschnittstelle 8 auf, die ebenfalls mit dem Anlagenbus 7 verbunden ist. Über die Geräteschnittstellen 6, 8 können die Operator Station Server 2,3 mit einem (externen) Gerät 9 wie einer Automatisierungsstation kommunizieren. Bei dem angeschlossenen Gerät 9 kann es sich auch um eine Applikation, insbesondere Webapplikation, handeln. Im Rahmen der Erfindung kann eine beliebige Zahl an Geräten und/oder Applikationen 9 an den Operator Station Servern 2, 3 angeschlossen sein. Der Anlagenbus 7 kann, ohne sich darauf zu beschränken, beispielsweise als Industrial Ethernet ausgebildet sein. Das Gerät 9 kann wiederum mit einer beliebigen Anzahl an Subsystemen (nicht dargestellt) verbunden sein.

In den Operator Station Servern 2, 3 ist jeweils ein Visualisierungsdienst 10, 11 integriert, über die eine Übertragung von (Visualisierungs-)Daten an den Operator Station Client 3 erfolgen kann. Zudem weisen die Operator Station Server 2,3 jeweils ein Prozessabbild (Process Image) 12, 13 auf. In den Prozessabbildern 12, 13 der Operator Station Server 2, 3 sind Momentaufnahmen der (Signal-)Zustände der mit den Operator Station Servern 2, 3 über die Geräteschnittstellen 6, 8 verbundenen Geräte und/oder Applikationen 9 hinterlegt.

In beiden Operator Station Servern 2, 3 ist ein Ermittlungsdienst 14, 15 implementiert. Die Ermittlungsdienste 14, 15 umfassen jeweils eine Konfigurationsdatenbank 16, 17 und ein Validierungsdienst 18, 19, deren Funktionen nachfolgend anhand einer beispielhaften Bedienhandlung eines Operators des Leitsystems 1 (hier. Quittieren einer Alarmmeldung) erläutert werden.

Der Operator will eine Alarmmeldung des Leitsystems 1 quittieren und stellt über den Operator Station Client 4 eine entsprechende Anfrage an den (zuständigen) Visualisierungsdienst 11 des ersten Operator Station Servers 2 (Schritt I) bzw. an einen in dem Visualisierungsdienst 11 implementierten Alarmdienst 20. Gleichzeitig mit der Anfrage zur Quittierung der Alarmmeldung wird auch der Ermittlungsdienst 14 des ersten Operator Station Servers 2 getriggert (Schritt II). Dieser ermittelt die von der angefragten Bedienhandlung betroffenen Komponenten des Leitsystems 1. Hierzu greift der Ermittlungsdienst 14 auf die Konfigurationsdatenbank 15 des ersten Operator Station Servers 2 zu. In der Konfigurationsdatenbank 15 ist hinterlegt, welche (Software-)Komponenten bei welchen Bedienhandlungen zum Tragen kommen. Zu jeder (Software-)Komponente sind dabei die sogenannten "vertrauenswürdigen Referenz- bzw. Soll-Werte" (engl. "Trusted set values") abgelegt. Hierbei kann es sich insbesondere handeln um:
- eine eindeutige (vom Hersteller der Komponente vergebene) Identifikation (ID)
- ein vom Hersteller der Komponente signierter Hashwert
- ein Zertifikat des Herstellers der Komponente (engl. "Signing Certificate")

Außerdem können in der Konfigurationsdatenbank 15 die Zertifikate der "Certification Authorities" (CAs), die die Zertifikate der Hersteller (mit welchem die Komponenten signiert wurden) ausgestellt und signiert haben, sowie die Zertifikate der zugehörigen übergeordneten "Certification Authorities" bis zu den zugehörigen Wurzel-CAs (Root Certification Authorities) sicher hinterlegt bzw. installiert sein. Die Wurzel-CAs der Hersteller dienen dabei als Vertrauensanker. Deren Zertifikate können (genauso wie die Zertifikate der untergeordneten CAs) beispielsweise im Rahmen einer sicheren Installationsroutine des Leitsystems 1 installiert worden sein.

Im vorliegenden Beispiel sind neben dem Alarmdienst 20 des Operator Station Servers 2 eine Alarmschnittstelle 21 und ein Distributionsdienst 22 des ersten Operator Station Servers 2 von der Bedienhandlung betroffen. Zudem sind ein Distributionsdienst 23, ein Ereignisdienst 24 und das Prozessabbild 12 des zweiten Operator Station Servers 3 von der Bedienhandlung betroffen.

Der Validierungsdienst 18 des ersten Operator Station Servers 2 prüft (Schritt III), ob die Integrität der an der Bedienhandlung beteiligten Komponenten gegeben ist. Im Rahmen der Validierung werden die Hashwerte zu den beteiligten Software-Komponenten gebildet und ein Abgleich dieser Hashwerte mit den vertrauenswürdigen, in der Konfigurationsdatenbank 15 sicher hinterlegten Hashwerten der Hersteller vorgenommen. Das Ergebnis der Integritätsprüfung wird an den Operator zurückgemeldet (Schritt IV). Im Falle einer positiven Integritätsprüfung wird die Bedienhandlung, also die Quittierung der Alarmmeldung, vorgenommen (Schritt V). Im Fall einer negativen Integritätsprüfung wird dem Operator eine Wahloption visuell dargeboten, bei welcher entscheiden kann, ob die eigentliche Quittierung der Alarmmeldung trotzdem durchgeführt werden soll (auch im Fall einer negativen Integritätsprüfung kann dies in manchen Fällen erwünscht / notwendig sein), oder ob zuerst die Ursache für die fehlende Integrität ermittelt und behoben werden soll. Zudem wird ein zustandsloser Alarm ausgelöst und in einem Datenspeicher (nicht dargestellt) des Leitsystems 1 hinterlegt. Damit sind für ein Audit Trail sämtliche Vorgänge dokumentiert, wodurch die Rückverfolgbarkeit sichergestellt wird.

Die sich aus diesen erfindungsgemäßen technischen Merkmalen ergebenden Vorteile äußern sich - aufgrund der gezielten Integritätsprüfung, die proaktiv, unmittelbar vor jeder Ausführung einer Bedienhandlung vorgenommen werden kann - insbesondere in einem fundierten Beitrag zur Anlagenverfügbarkeit (und somit zu einer erhöhten Zuverlässigkeit) sowie zur Systemintegrität. Außerdem wird durch die gezielte, und vor allem ressourcenschonend durchgeführte Integritätsprüfung, die sich auf die jeweils an der Ausführung der Bedienhandlung beteiligten (Software-)Komponenten beschränkt, zur deutlichen Verbesserung der Performanz beigetragen.

Da die Verfügbarkeit in verfahrenstechnischen Anlagen oberste Priorität hat, kann eine Bedienhandlung, deren Ausführung die Nutzung eines sich im Rahmen der Prüfung als korrupt bzw. manipuliert erwiesenen (Software)-Komponente erfordert, nicht "endgültig" abgebrochen, sondern nur für eine kurze Zeit abgebrochen bzw. verzögert werden. Währenddessen bekommt der Operator die Möglichkeit, zu entscheiden, ob er die Bedienhandlung ohne bestandene Integritätsprüfung durchgeführt haben möchte.

Des Weiteren kann durch den oben erläuterten durch die vorliegende Erfindung geleisteten fundierten Beitrag zur Systemintegrität, Verfügbarkeit und Rückverfolgbarkeit zur Konformität mit dem führenden internationalen Security-Standard IEC 62443 beigetragen werden.

## Patentansprüche

1. Operator Station Server (2, 3) eines Leitsystems (1) für eine technische Anlage, insbesondere eine Fertigungs- oder Prozessanlage, der dazu ausgebildet und vorgesehen ist, eine Anfrage für eine Bedienhandlung von einem Operator der technischen Anlage entgegenzunehmen und die Ausführung der Bedienhandlung zu bewirken,
**dadurch gekennzeichnet, dass**
der Operator Station Server (2, 3) dazu ausgebildet und vorgesehen ist, vor der Ausführung der Bedienhandlung eine Integritätsprüfung bei von der Bedienhandlung betroffenen Komponenten (20, 21, 22, 23, 24, 12) des Leitsystems (1) vorzunehmen.

2. Operator Station Server (2, 3) nach Anspruch 1, der dazu ausgebildet und vorgesehen ist, das Ergebnis der Integritätsprüfung in einem Datenspeicher zu hinterlegen.

3. Operator Station Server (2, 3) nach Anspruch 2, der dazu ausgebildet und vorgesehen ist, eine zustandlose Alarmmeldung zu erzeugen und in dem Datenspeicher zu hinterlegen.

4. Operator Station Server (2, 3) nach Anspruch 3, bei dem die zustandlose Alarmmeldung Informationen darüber umfasst, welcher Art die angefragte Bedienhandlung ist, welche Komponenten (20, 21, 22, 23, 24, 12) von der Bedienhandlung betroffen sind und wie das Ergebnis der Integrationsprüfung lautet.

5. Operator Station Server (2, 3) nach einem der vorangegangenen Ansprüche, bei dem der Datenspeicher cloudbasiert ist und sich außerhalb der technischen Anlage befindet.

6. Operator Station Server (2, 3) nach einem der vorangegangenen Ansprüche, der dazu ausgebildet und vorgesehen ist, dem Operator vor dem Stellen der Anfrage eine Auswahloption darüber visuell darzubieten, ob die Integrationsprüfung für die Bedienhandlung durchgeführt werden soll.

7. Operator Station Server (2, 3) nach einem der vorangegangenen Ansprüche, der dazu ausgebildet und vorgesehen ist, dem Operator das Ergebnis der Integritätsprüfung explizit visuell darzubieten.

8. Operator Station Server (2, 3) nach einem der vorangegangenen Ansprüche, der dazu ausgebildet und vorgesehen ist, dem Operator für den Fall einer negativen Integritätsprüfung vor dem Bewirken der Bedienhandlung eine Auswahloption darüber visuell darzubieten, ob die Bedienhandlung tatsächlich bewirkt werden soll.

9. Operator Station Server (2, 3) nach einem der vorangegangenen Ansprüche, bei dem bei der Integritätsprüfung Hashwerte und/oder Zertifikate der einzelnen Komponenten (20, 21, 22, 23, 24, 12) einbezogen werden.

10. Leitsystem (1) für eine technische Anlage, das wenigstens einen Operator Station Server (2, 3) gemäß einem der vorangegangenen Ansprüche aufweist.

11. Verfahren, umfassend:
a) Stellen einer Anfrage für eine Bedienhandlung an einen Operator Station Server (2, 3) eines Leitsystems (1) einer technischen Anlage durch einen Operator der technischen Anlage;
b) Automatisiertes Ermitteln der von der angefragten Bedienhandlung betroffenen Komponenten (20, 21, 22, 23, 24, 12) des Leitsystems (1) durch den Operator Station Server (2, 3);
c) Vornehmen einer Integritätsprüfung der zuvor ermittelten Komponenten (20, 21, 22, 23, 24, 12) durch den Operator Station Server (2, 3).

12. Verfahren nach Anspruch 11, bei dem dem Operator nach dem Vornehmen der Integritätsprüfung durch den Operator Station Server (2 ,3) eine Auswahloption darüber visuell dargeboten wird, ob die Bedienhandlung tatsächlich bewirkt werden soll, wobei die Bedienhandlung im Anschluss bewirkt wird, wenn der Operator diese Option auswählt.

13. Verfahren nach Anspruch 11 oder 12, bei dem im Rahmen des Ermittelns der von der Bedienhandlung betroffenen Komponenten die Komponenten (20, 21, 22, 23, 24, 12) berücksichtigt werden, die an der Ausführung der Bedienhandlung beteiligt sind.
